# EUROPÄISCHE PATENTSCHRIFT

(11) **EP 1 531 964 B1**
(45) Veröffentlichungstag und Bekanntmachung des Hinweises auf die Patenterteilung: **31.10.2007**
(21) Anmeldenummer: 03792400.8
(22) Anmeldetag: 20.08.2003
(51) Int. Cl.: B23K 26/08, B23K 26/38, B23K 26/40, A47L 15/14, B05B 1/20

(54) **VERFAHREN ZUM HERSTELLEN VON DÜSENARTIGEN AUSBRÜCHEN IN SPRÜHARMEN FÜR GESCHIRRSPÜLMASCHINEN**
METHOD OF PRODUCING NOZZLE-TYPE OPENINGS IN SPRAY ARMS FOR DISHWASHER MACHINES
PROCEDE DE FABRICATION D'OUVERTURES EN FORME DE BUSES DANS DES BRAS GICLEURS DE LAVE-VAISSELLE

(30) Priorität: 22.08.2002 DE 10238557
(43) Veröffentlichungstag der Anmeldung: 25.05.2005
(73) Patentinhaber: BSH Bosch und Siemens Hausgeräte GmbH, 81739 München (DE)
(72) Erfinder: REHM, Karl-Heinz, 89561 Dischingen (DE); HEISELE, Bernd, 89567 Sontheim (DE); KÖTHER, Claus, 89168 Niederstotzingen (DE)
(86) Internationale Anmeldenummer: PCT/EP2003/009246
(87) Internationale Veröffentlichungsnummer: WO 2004/018143

(56) Entgegenhaltungen:
- EP-A- 0 695 600
- EP-A- 0 715 926
- DE-A- 3 816 408
- DE-A- 4 405 203
- US-A- 4 420 005
- US-A- 4 582 259
- PATENT ABSTRACTS OF JAPAN vol. 1999, no. 05, 31. Mai 1999 (1999-05-31) & JP 11 047965 A (KOMATSU LTD), 23. Februar 1999 (1999-02-23)

## Beschreibung

Die Erfindung betrifft ein Verfahren zum Herstellen von düsenartigen Ausbrüchen in Sprüharmen für Geschirrspülmaschinen gemäß dem Oberbegriff des Anspruchs 1 (siehe z.B. US-A-4 420 005).

Bei bekannten Verfahren zum Herstellen von düsenartigen Ausbrüchen in Sprüharmen für Geschirrspülmaschinen werden die aus Kunststoff bestehenden Sprüharme mittels eines sogenannten Extrusionsblasverfahrens hergestellt, d.h. ein granulat- oder pulverförmig vorliegender Kunststoff wird in einem thermischen Verfahren plastifiziert und diese hoch viskose Masse anschließend durch ein formgebendes Werkzeug in eine entsprechende Form gebracht. Da die Sprüharme hohl ausgebildet sind, wird als Ausgangskörper zur Herstellung der Sprüharme ein gemäß beschriebenem Extrudierverfahren hergestellter Schlauch verwendet, der auf eine gewisse Temperatur erwärmt und in diesem verformbaren Zustand durch ein entsprechendes Blaseverfahren in ein gekühltes Profilwerkzeug gepresst wird. Der so hergestellte Sprüharmrohling weist alle Merkmale des fertiggestellten Sprüharms auf, bis auf die ausgesparten düsenartigen Ausbrüche, die in einem zweiten Fertigungsschritt hergestellt werden müssen.

Da die düsenartigen Ausbrüche Öffnungen sind, ist es gegenwärtig nicht möglich, die düsenartigen Ausbrüche bereits während des Extrusionsblasverfahrens herzustellen. Hierzu sind die Bereiche des Sprüharmrohlings, die für die düsenartigen Ausbrüche vorgesehen sind als sog. Dome ausgebildet, die in einem weiteren Fertigungsverfahren entfernt bzw. bearbeitet werden müssen.

Herkömmlicherweise werden die Sprüharmrohlinge zur Herstellung der düsenartigen Ausbrüche einem schneidenden oder spanenden Verfahren unterzogen, wobei die düsenartigen Ausbrüche mittels Schneidmessern oder Fräsköpfe, d.h. Fingerfräser und/oder Spiralbohrern hergestellt werden, beispielsweise indem die überstehenden Dome abgeschnitten oder abgefräst werden.

Die herkömmlichen Verfahren zum Herstellen von düsenartigen Ausbrüchen in Sprüharmen sind daher kostenintensiv und benötigen Nacharbeitungsvorrichtungen in die die Sprüharmrohlinge eingespannt werden müssen, die einem gewissen Verschleiß und damit der Instandhaltung unterliegen.

Als nachteilig hat sich ferner herausgestellt, dass Variationen der düsenartigen Ausbrüche in den Sprüharmen ein Umrüsten der Nacharbeitungsvorrichtungen erforderlich machen, da insbesondere die jeweilige Form der düsenartigen Ausbrüche als auch der Winkel des Düsenkanals für die Wirkweise des Sprüharms von entscheidender Bedeutung ist, jedoch das Umrüsten und Anpassen der Nacharbeitungsvorrichtungen zeitaufwendig, mechanisch anspruchsvoll und kostenintensiv ist. Weiterhin ergibt sich ein zeitlicher und kostenintensiver Aufwand für Testläufe der Vorrichtungen und von Musteranfertigungen der Sprüharme.

Aufgabe der vorliegenden Erfindung ist es daher, ein Verfahren zum Herstellen von düsenartigen Ausbrüchen in Sprüharmen für Geschirrspülmaschinen bereitzustellen, welches es ermöglicht, die Form der düsenartigen Ausbrüche in Sprüharmen auch bei nur einem Sprüharm rasch abzuändern und bei unterschiedlichen Sprüharmen im Herstellungsprozess unterschiedliche Düsengeometrien vorzusehen.

Diese Aufgabe wird durch das erfindungsgemäße Verfahren mit den Merkmalen gemäß Anspruch 1 gelöst. Vorteilhafte Weiterbildungen der vorliegenden Erfindung sind in Unteransprüchen gekennzeichnet.

Bei den erfindungsgemäßen Verfahren zum Herstellen von düsenartigen Ausbrüchen in Sprüharmen für Geschirrspülmaschinen werden nach Fertigstellen des Sprüharmrohlings düsenartige Ausbrüche unterschiedlicher Formgebung mittels Laser aus der Oberfläche des Sprüharmrohlings herausgeschnitten.

Durch die erfindungsgemäße Verwendung von Laser wird der Laser beim Herausschneiden der düsenartigen Ausbrüche so geführt, dass die Wandungen des Düsenkanals so ausgebildet sind, dass gewünschte, aber keine unnötigen Turbulenzen des austretenden Sprühstrahl im Nahbereich des Düsenaustritts erfolgen, d.h. das Strömungsverhalten des Sprühstrahles ist durch eine entsprechende Verwendung des Lasers eingestellt Aufgrund einer scharfkantigen Ausführung der düsenartigen Ausbrüche wird eine Einschnürung des Austrittsstrahls erzeugt, die durch die Ausflusszahl µ bestimmt wird. Diese Ausflusszahl µ hat eine Vergrößerung der Düsenquerschnittsfläche zur Folge, wodurch Verstopfungen oder Verschmutzungen der düsenartigen Ausbrüche vermieden werden.

Vorteilhafterweise können die Ausbrüche unterschiedliche Formen aufweisen, die von einer Kreisform abweichen, wie beispielsweise ellipsen-, wellenförmig, rechteckig, rautenförmig etc.

Bei einer bevorzugten Variante des erfindungsgemäßen Verfahrens ist der Laser zum Ausschneiden der düsenartigen Ausbrüche in seiner Lage leicht verschiebbar und schwenkbar, so dass nicht nur die Form der Düsenkanäle unterschiedlich ausgebildet werden kann, sondern auch der Düsenkanal als solcher unterschiedliche Neigungswinkel aufweisen kann.

## Patentansprüche

1. Verfahren zum Herstellen von düsenartigen Ausbrüchen in Sprüharmen aus Kunststoff für Geschirrspülmaschinen, **dadurch gekennzeichnet, dass** nach Fertigstellen des blasgeformten Sprüharmrohlings scharfkantig ausgebildete düsenartige Ausbrüche mittels Laser aus der Oberfläche des Sprüharmrohlings herausgeschnitten werden, die eine Einschnürung eines Austrittstrahls bewirken.

2. Verfahren zum Herstellen von düsenartigen Ausbrüchen nach Anspruch 1, **dadurch gekennzeichnet, dass** die Ausbrüche Formen aufweisen, die von einer Kreisform abweichen.

3. Verfahren zum Herstellen von düsenartigen Ausbrüchen nach Anspruch 1 oder 2, **dadurch gekennzeichnet, dass** die Ausbrüche ellipsen-, wellen- rautenförmig oder rechteckig sind.

## Claims

1. Method of producing nozzle-like passages in spray arms of plastics material for dishwashing machines, **characterised in that** after producing the blow-moulded spray arm blank nozzle-like passages formed with sharp edges are cut out from the surface of the spray arm blank by means of laser, which passages produce a constriction of an issuing jet.

2. Method of producing nozzle-like passages according to claim 1, **characterised in that** the passages have shapes which deviate from a circular shape.

3. Method of producing nozzle-like passages according to claim 1 or 2, **characterised in that** the passages are elliptical, waviform, lozenge-shaped or rectangular.

## Revendications

1. Procédé de fabrication d'ouvertures en forme de buses dans des bras gicleurs, en matière synthétique, de lave-vaisselle, **caractérisé en ce qu'**après l'achèvement de l'ébauche, moulée par soufflage, des bras gicleurs, des ouvertures en forme de buses exécutées à angles vifs sont découpées par laser dans la surface de l'ébauche des bras gicleurs, ces ouvertures ayant pour effet un rétrécissement d'un jet de sortie.

2. Procédé de fabrication d'ouvertures en forme de buses selon la revendication 1, **caractérisé en ce que** les ouvertures présentent des formes qui diffèrent d'une forme circulaire.

3. Procédé de fabrication d'ouvertures en forme de buses selon la revendication 1 ou 2, **caractérisé en ce que** les ouvertures sont elliptiques, ondulées, en forme de losange ou rectangulaires.
